# EUROPÄISCHE PATENTSCHRIFT

(11) **EP 1 060 837 B1**
(45) Veröffentlichungstag und Bekanntmachung des Hinweises auf die Patenterteilung: **16.03.2005**
(21) Anmeldenummer: 00111375.2
(22) Anmeldetag: 26.05.2000
(51) Int. Cl.: B25B 1/24, B23Q 3/06, B29C 65/78, B29C 65/16, B29C 65/14

(54) **Durchstrahl-Laser-Schweisseinrichtung**
Transmission laser welding device
Dispositif de soudage au laser par transmission

(30) Priorität: 28.05.1999 DE 19924469
(43) Veröffentlichungstag der Anmeldung: 20.12.2000
(73) Patentinhaber: BIELOMATIK LEUZE GmbH + Co., D-72639 Neuffen (DE)
(72) Erfinder: Korte, Jörn, Dr., 72584 Hülben (DE)
(74) Vertreter: Patentanwälte Ruff, Wilhelm, Beier, Dauster & Partner

(56) Entgegenhaltungen:
- EP-A- 0 453 698
- EP-A- 0 942 139
- WO-A-00/13763
- WO-A-95/26869
- DE-A- 4 225 679
- GB-A- 2 244 635
- US-A- 3 357 622
- US-A- 4 006 525
- US-A- 4 847 467
- US-A- 5 616 261
- US-A- 5 674 420
- PATENT ABSTRACTS OF JAPAN vol. 012, no. 409 (M-758), 28. Oktober 1988 (1988-10-28) & JP 63 151432 A (SHARP CORP), 24. Juni 1988 (1988-06-24)
- PATENT ABSTRACTS OF JAPAN vol. 012, no. 145 (M-693), 6. Mai 1988 (1988-05-06) & JP 62 267125 A (STANLEY ELECTRIC CO LTD), 19. November 1987 (1987-11-19)
- BAUM G: "EIN NEUARTIGES STRAHLFUEHRUNGSSYSTEM FUER DIE RAUMLICHE LASERMATERIALBEARBEITUNG" WERKSTATTSTECHNIK, SPRINGER VERLAG. BERLIN, DE, Bd. 81, Nr. 7, 1. Juli 1991 (1991-07-01), Seiten 427-430, XP000287303 ISSN: 0340-4544

## Beschreibung

Die Erfindung betrifft eine Anordnung zur Halterung von Werkstücken während der Schweißverbindung von deren Fügeflächen mit einer Energiestrahlung, deren Wellenlänge im oder nahe beim Infrarot-Bereich liegen kann. Die beiden Fügeflächen aus thermoplastischem Kunststoff oder dgl. werden während der Plastifizierung in Deckung in Kontakt miteinander gehalten. Dadurch wird zuerst die eine Fügefläche und beim Durchstrahl-Schweißen erst danach die andere Fügefläche plastifiziert, nämlich dadurch, daß die zweite Fügefläche mit der plastifizierten ersten Fügefläche benetzt und so durch Wärmeleitung ebenfalls plastifiziert wird.

Soll zum Beispiel eine wulstfreie Schweißverbindung hergestellt werden, können Formteiltoleranzen der Werkstücke nicht durch Abschmelzen nivelliert werden. Vielmehr müssen die Fügeflächen bereits zu Beginn der Plastifizierung ununterbrochen vollflächig miteinander in Berührung stehen, auch, wenn sie in entspanntem Zustand nicht komplementär sind, z.B. Spalte bilden. Dies ist mit starren Spannflächen bzw. starren Aufnahme- oder Halterungs-Werkzeugen nicht zu erreichen, so daß die Schweißverbindung in den Spaltbereichen undicht sein kann.

Das eingangs erwähnte Durchstrahl-Schweißverfahren ist z.B. aus der WO 95/26869 bekannt. Dabei durchdringt der Laserstrahl den einen zu verschweißenden Werkstückteil, ohne diesen wesentlich zu erwärmen, weil dieser Werkstückteil für die entsprechende Wellenlänge transparent ist. Er trifft auf den anderen Werkstückteil, der diese Eigenschaft nicht hat und erwärmt diesen, womit dann der ersten Werkstückteil durch Kontaktwärme-Übertragung mit auf Schweißwärme gebracht wird. Der wandernden Schweißstelle wird eine Andruckrolle nachgeführt. Bei dieser Ausführung treten die vorher beschriebenen Probleme auf.

Die US 4 006 525 zeigt einen Spannbacken, dessen Spannflächen über flach-S-förmige Stege mit einem Grundkörper verbunden sind. Sie können sich dadurch flexibel und begrenzt unabhängig voneinander bewegen.

Der Erfindung liegt die Aufgabe zu Grunde, eine Durchstrahl-Laser Schweißeinrichtung zu schaffen, mit welcher Nachteile bekannter Ausbildungen bzw. der beschriebenen Art vermieden werden können. Insbesondere sollen Fügeflächen, welche bei kraftloser Anlage aufgrund von Werkstücktoleranzen zwischen Kontaktbereichen willkürlich verteilte Spaltbereiche begrenzen, während der Plastifizierung bis zur Erstarrung der Schweiß-Schmelze auch in den Spaltbereichen in Kontakt miteinander gebracht werden können. Vor allem soll die Anpreßkraft zwischen den Fügeflächen in den Spaltbereichen etwa gleich groß wie in den unmittelbar anschließenden Kontaktbereichen sein, so daß sich über die gesamte Ausdehnung der Fügeflächen kontinuierlich ein konstanter spezifischer Anpreßdruck ergibt. Die Einrichtung soll einfach im Aufbau und in der Bedienung sein.

Diese Aufgabe wird durch die Merkmale des Anspruchs 1 gelöst.

Es sind also Spannmittel vorgesehen, um die Fügeflächen unabhängig von der Neigung zu Spaltbildungen über ihre gesamte Flächenerstreckung lückenlos und im wesentlichen druckkonstant aneinander anzulegen, so daß dabei die Schweißung bis zur Erstarrung durchgeführt werden kann. Bei Druck- oder Biegeflexibilität bzw. entsprechender Elastizität der zwischen den Spannflächen eingespannten, nämlich die Fügeflächen aufweisenden Querschnitte des Werkstückes kann dies dadurch erreicht werden, daß eine oder beide Spannflächen an der Außenseite des jeweiligen Querschnittes mit ausreichend kleinen Einzelflächen angreifen, die gegeneinander quer zu den Fügeflächen bewegbar sind. Die in Spaltbereichen liegenden Einzelflächen können dadurch diese Spaltbereiche unter inhärenter Verformung des zugehörigen Querschnittes verschließen, ohne daß benachbarte Kontaktbereiche wesentlich verstärkt gegeneinander gedrückt werden.

Die flexiblen oder elastischen Spannflächen können z.B. durch Elastomer- oder Gummikörper, federnde Segmente aus drucksteifem Werkstoff, Hebelarme, mit Fluiddruck beaufschlagbare Hohlkörper, wie Schläuche, die Endflächen gesondert gelagerter Stifte oder dgl. gebildet sein. Diese Stifte oder Spannelemente können federnd gelagert, nämlich mit Federn, wie Tellerfedern, Spiralfedern oder dgl., bzw. pneumatisch gegen die Fügeebene belastet sein. Sie können aber auch unmittelbar abhängig von ihrem Anpreßdruck am Werkstück so gesteuert sein, daß der flächenspezifische Anpreßdruck jedes Stiftes gleich demjenigen aller anderer Stifte ist. Hierzu können die Stifte als Kolben ausgebildet und ihre von den Spannflächen abgekehrten Enden dem gleichen hydraulischen Druck ausgesetzt sein.

Die Halterung eignet sich besonders für nicht geradlinige Schweiß-Verbindungen, welche parallel zur Fügeebene gekrümmt und/oder winkelförmig verlaufen. Solche Verbindungen sind z.B. für scheibenförmige Flansche, wie Ringflansche von druckdichten Behältern, vorgesehen, wobei die quer zur Fügeebene zu messende Flanschdicke die genannten Toleranzen bzw. Unregelmäßigkeiten aufweist. Die gesamte, z.B. ringförmige, Fügezone kann dabei gleichzeitig plastifiziert bzw. nach der Plastifizierung gleichzeitig erstarren gelassen werden. Bevorzugt wird die Fügezone in Längsrichtung nach und nach plastifiziert. Bevor ihre letzte Stelle erwärmt wird, ist die zuerst erwärmte Stelle bereits abgekühlt. Letztere wirkt dann als Anschlag, durch den die Fügeteile nicht aufeinander zu bewegt werden können. Daher sind die Spannflächen entsprechend nicht-linear ausgebildet, so daß ihre Einzelflächen gleichzeitig über die gesamte Länge der Schweiß-Verbindung in der beschriebenen Weise mit ihren Einzelflächen anliegen. Die Einzelflächen liegen dabei in Längsrichtung der Schweiß-Verbindung nebeneinander, können aber auch quer zu dieser Längsrichtung nebeneinander liegen.

Die Spannkörper der Halterung bilden oder begrenzen einen Durchlaβ für den Schweiβ-Energiestrahl (Laserstrahl), welcher den einen Querschnitt und die zugehörige Fügefläche durchdringt und die Fügefläche samt Fügezone des anderen, abgedeckten Querschnittes plastifiziert, so daß die dadurch gebildete Schmelze die gegenüberliegende, abdeckende Fügefläche einschließlich ihrer Fügezone benetzt und durch Wärmeleitung ebenfalls plastifiziert, wonach durch Erstarrung der so gebildeten Fügeschmelze die Schweiß-Verbindung hergestellt ist. Während dieses Ablaufes sorgen die Spannflächen permanent dafür, daß alle Flächenbereiche der Fügeflächen mit gleichem Druck gegeneinander gepreßt werden. Zur Bildung des Durchlasses für den Energiestrahl kann eine Spannfläche quer zur Längsrichtung der Schweißnaht gegenüber der anderen Spannfläche zurückversetzt sein, welche zweckmäßig die Einzelflächen aufweist.

Eine Spannfläche kann auch formstarr sein, insbesondere, wenn die Biege- bzw. Drucknachgiebigkeit des an ihr abgestützten Werkstück-Querschnittes groß genug ist.

Die Spannkraft bzw. der Spannweg wird mit einer geeigneten Einrichtung permanent automatisch gesteuert, um eine zu starke Verformung der Werkstücke zu vermeiden. Hierzu wird der jeweilige Wert unmittelbar an der Halterung permanent gemessen und an die Steuermittel weitergeleitet, die ihrerseits permanent eventuell erforderliche Korrekturen bzw.

Änderungen bewirken, indem sie den Spannantrieb der Halterung betätigen.

Ausführungsbeispiele der Erfindung sind in den Zeichnungen dargestellt und werden im Folgenden näher erläutert. In den Zeichnungen zeigen:
- Fig. 1: eine erfindungsgemäße Schweiß-Halterung in vereinfachter perspektivischer Darstellung,
- Fig. 2: ein Detail der Halterung gemäß Fig. 1 in vergrößerter Darstellung,
- Fig. 3: ein Ausführungsbeispiel für eine Schweiß-Verbindung im Querschnitt und vergrößerter Darstellung,
- Fig. 4: eine weitere Ausführungsform in einer Darstellung entsprechend Fig. 3 und
- Fig. 5: eine weitere Ausführungsform in Ansicht auf die Fügeebene.

Zur Aufnahme oder Halterung 1 gehört eine Schweiß-Einrichtung 2 mit einem Beschriftungs- oder Scanner-Kopf 3 und einem Sockel 5. Der Halter 1 dient zur stationären Halterung des zu bearbeitenden Werkstückes und hat eine stationäre Basis 4, die mit dem Sockel 5 fest verbunden ist. Jede Einheit 1 bzw. 3 ist unabhängig von der anderen auswechselbar an bzw. auf einem Grundgestell angeordnet.

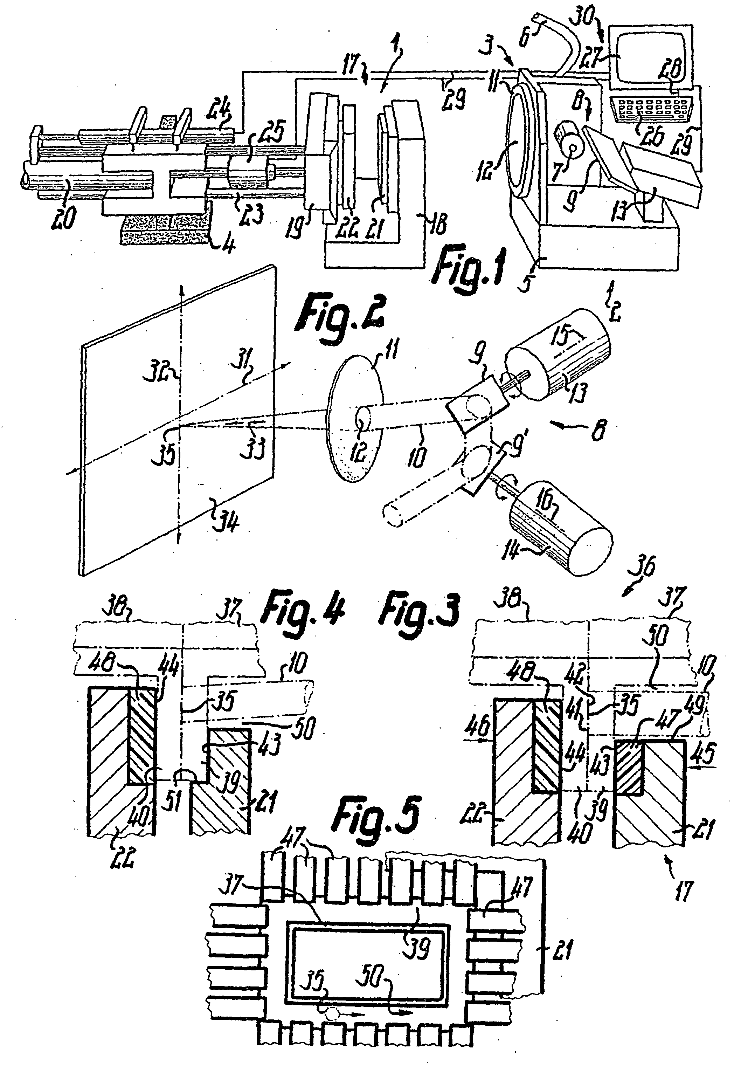

Der Kopf 3 ist direkt an einen Laser gekoppelt oder hat eine Strahlführung mit einem Lichtleiter 6, dessen Ausgang 7, einer Lenkeinrichtung 8 für den Strahl, einem, zwei oder mehr Spiegeln 9, 9', einem Objektiv 11, einem Strahlausgang 12 und einem Motor 13 bzw. 14 für jeden Spiegel, die am Sockel 5 angeordnet sind. Der Leiter 6, wie ein Glasfaserkabel, leitet das polarisierte Laserlicht von einer Lichtquelle zum Zwischenausgang 7. Von diesem trifft der Strahl 10 unmittelbar auf den Spiegel 9, von dem der Strahl 10 unmittelbar durch das Objektiv 11 geführt wird. Der Spiegel 9 oder das Objektiv 11 bilden den Strahlenausgang 12, von welchem der Strahl frei direkt auf das Arbeitsfeld des Werkstückes geleitet wird. Der Motor 13 bzw. 14 trägt den Spiegel auf seiner Welle, deren Schwenkachse 15 bzw. 16 in der Spiegelebene und im Winkel zur Achse des Ausganges 12 liegt. Der Spiegel 9 kann auch um zwei zueinander rechtwinklige Achsen schwenkbar sein. Gemäß Fig. 2 ist dem Spiegel 9 ein weiterer Spiegel 9' mit gesondertem Motor 14 vorgeschaltet. Dessen Schwenkachse liegt im Winkel zu den Achsen des Spiegels 9 und des Fokusier-Objektives 11. Statt des Ausganges 12 kann auch der Ausgang 7 direkt auf die Naht gerichtet sein. Der Lichtleiter 6 wird dann mit einem Roboter oder mit Linearantrieben entlang der Naht geführt werden.

Die Einheit 1 hat einen Spannkopf 17 mit zwei einander gegenüberstehenden Wangen 18, 19 zur gegenseitigen Verspannung der miteinander zu verbindenden Werkstücke. Die Wange 18 ist mit den Konsolen 4, 5 fest verbunden. Die Wange 19 ist mit einem Antrieb 20, wie einem Pneumatikzylinder, gegenüber der Wange 18 linear bewegbar. An jeder Wange 18 bzw. 19 ist eine Backe 21 bzw. 22 ohne Zerstörung auswechselbar befestigt, beispielsweise durch Haftung, mit Schrauben oder dgl.. Die Wange 19 ist mit einer Führung 23 reversibel an der Basis 4 gelagert. Ein Aufnehmer 24 mißt den Bewegungsweg der Wange 19 gegenüber der Wange 18 kontinuierlich. Ein Aufnehmer 25 mißt die Kraft kontinuierlich, mit welcher die Wange 19 gegen die Wange 18 bzw. das Werkstück spannt.

Steuermittel 30 zur Betätigung der Lenkeinrichtung 8 und zur Steuerung des Spannweges sowie der Spannkraft umfassen eine Einrichtung 26 zur Eingabe der zugehörigen Daten. Die Einrichtung 26 hat einen elektronischen Datenspeicher mit den entsprechenden Programmen für unterschiedliche Werkstücke. Über die Eingabe bzw. Tastatur 26 können diese Programme eingegeben, verändert und so abgerufen werden, daß die Einrichtungen 1, 8 entsprechend dem vorgesehenen Verfahrensablauf automatisch arbeiten. Die Daten werden auf einem Monitor 27 sichtbar gemacht, welcher mit der Eingabe 26 über eine Signalleitung 28 und mit den Einrichtungen 13, 14, 24, 25 sowie mit dem Antrieb 20 über jeweils gesonderte Signalund Steuerleitungen 29 verbunden ist.

Fig. 2 zeigt schematisch als Werkstück ein ebenes Arbeitsfeld 34, in dessen Ebene zwei zueinander rechtwinklige Raumachsen 31, 32 gezeigt sind. Eine zu den Achsen 31, 32 rechtwinklige, dritte Raumachse 33 liegt rechtwinklig zum Feld 34. Mit der Einrichtung 8 wird der Strahl 10 kontinuierlich über das Arbeitsfeld 34 bewegt, indem seine zu den Achsen 31, 32 parallelen Bewegungen überlagert werden. Auf das Feld 34 trifft der Strahl 10 mit einem Strahlfeld 35. Dessen Größe wird durch die Optik 11 bzw. den Abstand zwischen Ausgang 12 und Feld 34 verändert. Dadurch wird das Strahlfeld 35 unabhängig vom genannten Abstand über das gesamte Feld 34 stets konstant groß gehalten. Haben die Fügeflächen quer zur Ebene 34 Kontur, so kann dieser bei konstant großem Feld 35 gefolgt werden. Dieses dreidimensionale Schweißen ist gut durchzuführen, wenn der Ausgang 7 mit einem Roboter bewegt wird.

Das Werkstück 36 umfaßt zwei zu verschweißende Werkstücke 37, 38, die ein Behälter 37 und ein diesen schließender Deckel 38 aus thermoplastischem Kunststoff sind. Dabei sind die Querschnitte 39, 40, nämlich zwei ringscheibenförmige Randflansche miteinander an ebenen, ringförmigen Fügeflächen 41, 42 ringförmig bzw. durchgehend dicht zu verschweißen. Der Teil 37 wird zur Montage in Richtung 45 bzw. in Gegenrichtung 46 an den Teil 38 angesetzt und mit der Einrichtung 17 in Richtung 45 gegen den Teil 38 verspannt. Die gleich großen Flächen 41, 42 liegen dann vollflächig in einer Fügeebene aneinander an, können jedoch durch flache Erhebungen bzw. Vertiefungen Spalte von weniger als zwei oder einem Zehntel Millimeter maximaler Spaltweite begrenzen. Solche Spalte können von aneinander liegenden Flächenbereichen kontinuierlich umgeben und daher geschlossene Taschen sein.

Die Backen 21, 22 weisen jeweils eine Spanrifläche 43 bzw. 44 auf, welche an der von den Flächen 41, 42 abgekehrten Flächen der Querschnitte 39, 40 über eine Fläche anliegen, die größer als die Hälfte, zwei Drittel oder drei Viertel der Fläche ist, die ihre Umfangskante einschließt. Die Spannfläche 43 bzw. 44 ist wie die zugehörige Gegenfläche des Querschnittes 39 bzw. 40 eben und zu den Flächen 41, 42 parallel. Die Flächen 43, 44 sind ringförmige Scheibenflächen, welche die Flansche 39, 40 über den gesamten Umfang kontinierlich abdecken. Insofern sind die Figuren 3 und 4 lediglich Scheibenschnitte.

Jede der Flächen 43, 44 ist druckelastisch nachgiebig, nämlich durch einen versenkt in der zugehörigen Backe 21 bzw. 22 angeordneten Einsatz 47 bzw. 48 gebildet. Dessen zur Fläche 43 bzw. 44 rechtwinklige Dicke ändert sich beim Spannen elastisch, so daß auch die genannten Spaltbereiche zwischen Flächen 41, 42 zusammengedrückt werden und alle Flächenbereiche ohne Spalte aneinander anliegen. Der Spannkörper 21, 47 bzw. 22, 48 kann in Ansicht parallel zur Richtung 45, 46 auch teilringförmig sein. Bei einer solchen geteilt ringförmigen Ausbildung können die Ringteile jedes Spannkörpers zum Einlegen und Herausnehmen des Werkstückes 36 parallel zu den Flächen 49, 42 auseinandergefahren und dann wieder in gegenseitigen Kontakt zurückbewegt werden. Die Einsätze 47, 48 sind in vertieften Taschen, nämlich Ringschultern der Backen 21, 22 fest angeordnet und durch Haftung, wie Klebung, befestigt.

Die Backen 21, 22 bilden auf der Seite des Querschnittes 39 ein Fenster oder einen Durchlaß 50 für den Strahl 10. Dazu ist das Ende 49 des Spannkörpers 21, 47 gegenüber dem Ende des anderen Spannkörpers 22, 48 um den Querschnitt des Strahles 10 zurückversetzt, nämlich bei ringförmiger Ausbildung der Innenumfang 49 größer als der Innenumfang des Körpers 22, 48. Dadurch kann der Strahl 10 zwischen dem Körper 21, 47 und dem an den Flansch 39 quer anschließenden Mantel des Teiles 37 unmittelbar auf den Flansch 39 treffen, diesen bis zur Fläche 42 durchdringen und den Flansch 40 an der Fläche 42 schmelzen.

Die Schmelze fließt zurück gegen die Fläche 41 und plastifiziert in deren Bereich auch den Flansch 39, während der Strahl 10 entlang des Umfanges der beiden Flächen 41, 42 bewegt wird, bis diese über den ganzen Umfang gleichzeitig in Schmelze übergegangen sind. Nach dem Erstarren ist zwischen den Flächen 41, 42 eine dichte, flächige Schweißnaht gebildet, ohne daß zwischen den Flächen 41, 42 Schmelze ausgetreten wäre. Der Spannweg der Backe 22 ist dabei durch den Aufnehmer 24 oder unmittelbar gegenüber der Backe 21 durch Anschlag begrenzt. Der Einsatz 47 bzw. 48 ist plattenförmig und besteht aus einem Elastomer, das gegenüber den auftretenden Schweiß-Temperaturen beständig ist.

Der Strahl 10 kann gemäß Fig. 4 entsprechend seiner Auslenkung durch die Einrichtung 8 auch schräg auf die Flächen 41, 42 fallen und so zwischen die Spannflächen 43, 44 gelangen. Die Spannfläche 43 ist hier unmittelbar durch die Backe 21 gebildet und formsteif. Durch vertiefte Anordnung der Fläche 43 bildet die Backe 21 einen Anschlag 51 für das radial äußere Ende bzw. den Außenumfang des Flansches 39, wodurch die Tiefe des Eingriffes der Flansche 39, 40 zwischen die Spannflächen 43, 44 genau festgelegt ist. Die Spannfläche 44 steht radial nach außen über den Außenumfang der Flansche 39, 40 vor.

Fig. 5 zeigt eine Spannbacke 21 in Richtung 45, so daß der ringförmige Durchlaß 50 und das Strahlfeld 35 erkennbar sind, das entsprechend dem Pfeil entlang der Ringstruktur umläuft. Die Einsätze 47 sind durch nebeneinander liegende, federnde Biegearme gebildet, die druckfest sind und aus Stahl bzw. Federstahl bestehen können. Benachbarte Arme 47 haben einen Abstand voneinander, der kleiner als ihre Breite oder deren Hälfte ist. Die Arme 47 stehen radial nach innen über die ringförmige Backe 21 vor und können unabhängig voneinander quer zu den Flächen 41, 42 elastisch ausgelenkt werden. Der andere Spannkörper 22, 48 kann gleich wie der Spannkörper 21, 47 ausgebildet sein oder eine starre Spannfläche 44 aufweisen.

## Patentansprüche

1. Durchstrahl-Laser-Schweißeinrichtung (2) zur Erzeugung eines Laserstrahls, mit dem unter Durchdringung eines Werkstückteils (37) eine Verschweißung mit dem anderen Werkstückteil (38) erfolgt, **gekennzeichnet durch** eine Schweißhalterung für das Werkstück (36) mit zwei Spannkörpern (21, 47; 22, 48) mit Spannflächen (43, 44), zwischen denen die zu verschweißenden Werkstückteile (37, 38) spannbar sind und die **durch** benachbarte, gleichzeitig mit dem Spanndruck gegen das Werkstück (36) drückende Einzelflächen definiert sind, wobei mindestens zwei Einzelflächen quer zur zugehörigen Spannfläche (43, 44) bewegbar sind und mit im wesentlichen gleichen Spanndruck gegen das Werkstück (36) drücken, wobei mindestens eine Spannfläche (44) mit einer Stellvorrichtung (20) relativ zur anderen Spannfläche (43) quer verstellbar ist, und wobei eine der Spannflächen (43) einen Durchlass (50) für den Laserstrahl (10) begrenzt.

2. Durchstrahl-Laser-Schweißeinrichtung nach Anspruch 1, **dadurch gekennzeichnet, daß** mindestens zwei bis alle Einzelflächen wenigstens einer Spannfläche (43, 44) einteilig miteinander ausgebildet sind, daß insbesondere benachbarte Einzelflächen annähernd lückenlos aneinander schließen, und daß vorzugsweise benachbarte Einzelflächen biegeelastisch miteinander verbunden sind.

3. Durchstrahl-Laser-Schweißeinrichtung nach Anspruch 1 oder 2, **dadurch gekennzeichnet, daß** mindestens zwei bis alle Einzelflächen in einem gegenüber der größten oder kleinsten Weite einer Einzelfläche kleineren Abstand nebeneinander liegen, daß insbesondere mehr als zwei Einzelflächen in mindestens einer Reihe nebeneinander angeordnet sind und daß vorzugsweise benachbarte Einzelflächen unabhängig voneinander querverstellbar sind.

4. Durchstrahl-Laser-Schweißeinrichtung nach einem der vorhergehenden Ansprüche, **dadurch gekennzeichnet, daß** mindestens eine Einzelfläche an einem druckelastischen Spanneinsatz (47 bzw. 48) vorgesehen ist, daß insbesondere der Spanneinsatz (47, 48) ein Elastomer umfaßt, und daß vorzugsweise die von der Einzelfläche abgekehrte Seite des Spanneinsatzes (47, 48) an einer formstarren Gegenfläche abgestützt ist.

5. Durchstrahl-Laser-Schweißeinrichtung nach einem der vorhergehenden Ansprüche, **dadurch gekennzeichnet, daß** mindestens eine Einzelfläche in sich drucksteif ist, daß insbesondere der Spanneinsatz (47) unabhängig von benachbarten Spanneinsätzen quer zu der Fügeebene der zu verschweißenden Werkstückteile (37, 38) bewegbar ist, und daß vorzugsweise der Spannkörper (21, 47) einen Kamm mit etwa parallel zur Fügeebene nebeneinander liegenden Kammfingern bildet, deren die Einzelflächen bildenden Enden quer zur Fügeebene biegeelastisch schwenkbar sind.

6. Durchstrahl-Laser-Schweißeinrichtung nach einem der vorhergehenden Ansprüche, **dadurch gekennzeichnet, daß** die Achse des Laserstrahles die nicht mit dem Durchlass versehene Spannfläche (44) schneidet, und daß vorzugsweise die andere Spannfläche (43) quer zur Schweiß-Vorschubrichtung und parallel zur Fügeebene gegenüber der nicht mit dem Durchlass versehenen Spannfläche (44) zurücksteht.

7. Durchstrahl-Laser-Schweißeinrichtung nach einem der vorhergehenden Ansprüche, **dadurch gekennzeichnet, daß** die Einzelflächen einer Spannfläche (43) im wesentlichen formstarr miteinander verbunden sind, daß insbesondere an einem Spannkörper (21) ein Werkstück-Anschlag (51) zur Ausrichtung des Werkstückes (36) gegenüber der gegenüberliegenden Spannfläche (44) vorgesehen ist, und daß vorzugsweise der Anschlag (51) an dem den Durchlaß (50) begrenzenden Spannkörper (21) vorgesehen ist.

8. Durchstrahl-Laser-Schweißeinrichtung nach einem der vorhergehenden Ansprüche, **dadurch gekennzeichnet, daß** der Spannkörper eine Spannbacke (21 bzw. 22) mit im wesentlichen allen zugehörigen Einzelflächen aufweist, die an einer formsteifen Spannwange (18 bzw. 19) fest angeordnet ist, daß insbesondere die Spannbacke (21, 22) auswechselbar an der Spannwange (18, 19) befestigt ist, und daß vorzugsweise die einander gegenüberstehenden Spannbacken (21, 22) unterschiedlich groß sind.

9. Durchstrahl-Laser-Schweißeinrichtung nach einem der vorhergehenden Ansprüche, **dadurch gekennzeichnet, daß** die Spannflächen (43, 44) in Ansicht teilring- bis ringförmig sind, daß insbesondere die Einzelflächen in Umfangsund/oder Radialrichtung der Spannflächen (43, 44) nebeneinander liegen, und daß vorzugsweise der Spannkörper (21, 47 bzw. 22, 48) ringförmig ist.

10. Durchstrahl-Laser-Schweißeinrichtung nach einem der vorhergehenden Ansprüche, **dadurch gekennzeichnet, daß** mit einer Halterungs-Basis (4) der Spannkörper eine Strahlführung für den Laserstrahl (10) mit einem gegen die zwischen den Spannflächen (43, 44) gehalterten Fügeflächen (41, 42) gerichteten Strahlausgang (12) zur Projezierung eines Strahlfeldes (35) des Laserstrahles (10) auf die Fügeflächen (41, 42) und mit einer Vorschubeinrichtung (13, 14) zur Bewegung des Strahfeldes (35) entlang den Fügeflächen (41, 42) verbunden ist, daß insbesondere die Strahlführung mindestens einen im Strahlgang liegenden Spiegel (9, 9') umfaßt, der um eine Stellachse (15 bzw. 16) motorisch reversibel schwenkbar ist, und daß vorzugsweise Steuermittel (30) zur Steuerung des Stellweges bzw. der Stellkraft der Spannfläche (44) vorgesehen sind, wobei mindestens ein Aufnehmer (24, 25) zur Messung des Spannweges bzw. der Stellkraft über eine Signalleitung (29) mit den Steuermitteln (30) und die Steuermittel (30) über eine Steuerleitung mit einem Antrieb (20), wie einem Pneumatikzylinder, des verstellbaren Spannkörpers (22, 48) verbunden sind.

## Claims

1. Transmission laser welding device (2) for producing a laser beam with which, accompanied by the penetration of a workpiece part (37), welding takes place with the other workpiece part (38), **characterized by** a welding holder for the workpiece (36) with two clamping members (21, 47; 22, 48) with clamping faces (43, 44) between which can be clamped the workpiece part (37, 38) to be welded and which are defined by adjacent individual faces pressing simultaneously with the clamping pressure against the workpiece (36), at least two single faces being movable at right angles to the associated clamping face (43, 44) and press with substantially the same clamping pressure against the workpiece (36), at least one clamping face (44) being transversely adjustable with an adjusting device (20) relative to the other clamping face (43) and one of the clamping faces (43) defines a passage (50) for the laser beam (10).

2. Transmission laser welding device according to claim 1, **characterized in that** at least two and up to all the single faces of at least one clamping face (43, 44) are constructed integrally with one another, that in particular adjacent single faces are connected in approximately uninterrupted manner and that preferably adjacent single faces are interconnected in flexurally elastic manner.

3. Transmission laser welding device according to claim 1 or 2, **characterized in that** at least two and up to all the single faces are juxtaposed with a spacing smaller than the largest or smallest width of a single face, that in particular more than two single faces are juxtaposed in at least one row and that preferably adjacent single faces are transversely adjustable independently of one another.

4. Transmission laser welding device according to one of the preceding claims, **characterized in that** at least one single face is provided on a compression elastic clamping insert (47 or 48), that in particular the clamping insert (47, 48) comprises an elastomer and that preferably the side of the clamping insert (47, 48) remote from the single face is supported on an inherently rigid opposing face.

5. Transmission laser welding device according to one of the preceding claims, **characterized in that** at least one single face is inherently rigid, that in particular the clamping insert (47) is movable independently of adjacent clamping inserts at right angles to the joining plane of the workpiece part (37, 38) to be welded and that preferably the clamping member (21, 47) forms a comb with juxtaposed comb fingers roughly parallel to the joining plane and whose planes forming the single faces are pivotable in flexurally elastic manner transversely to the joining plane.

6. Transmission laser welding device according to one of the preceding claims, **characterized in that** the laser beam axis intersects the clamping face (44) not provided with the passage and that preferably the other clamping face is set back at right angles to the welding advance direction and parallel to the joining plane compared with the clamping face (44) not provided with the passage.

7. Transmission laser welding device according to one of the preceding claims, **characterized in that** the individual faces of a clamping face (43) are interconnected in substantially dimensionally rigid manner, that in particular on one clamping member (21) is provided a workpiece stop (51) for orienting the workpiece (36) with respect to the facing clamping face (44) and that preferably the stop (51) is provided on the clamping member (21) defining the passage (50).

8. Transmission laser welding device according to one of the preceding claims, **characterized in that** the clamping member has a clamping jaw (21 or 22) with substantially all the associated single faces, which is firmly placed on a dimensionally rigid clamping side piece (18 or 19), that in particular the clamping jaw (21, 22) is replaceably fixed to the clamping side piece (18, 19) and that preferably the facing clamping jaws (21, 22) are of different sizes.

9. Transmission laser welding device according to one of the preceding claims, **characterized in that** the clamping faces (43, 44), in view, are part ring-shaped or annular, that in particular the single faces are juxtaposed in the circumferential and/or radial direction of the clamping faces (43, 44) and that preferably the clamping member (21,47 or 22, 48) is annular.

10. Transmission laser welding device according to one of the preceding claims, **characterized in that** to a holder base (4) of the clamping member is connected a beam guide for the laser beam (10) with a beam exit (12) directed against the joining faces (41, 42) held between the clamping faces (43, 44) for projecting a beam field (35) of the laser beam (10) on the joining faces (41, 42) and with an advance device (13, 14) for moving the beam field (35) along the joining faces (41, 42), that in particular the beam guide incorporates at least one mirror (9, 9') located in the beam path and which is pivotable in motor-reversible manner about an adjusting axis (15 or 16) and that preferably there are control means (30) for controlling the adjusting path or force of the clamping face (44), at least one sensor (24, 25) for measuring the clamping path or adjusting force being connected by means of a signal line (29) to the control means (30) and the latter are connected by means of a control line to a drive (20), such as a pneumatic cylinder of the adjustable clamping member (22, 48).

## Revendications

1. Dispositif de soudage au laser par transmission (2) pour la génération d'un rayon laser, qui permet, en passant à travers l'élément de la pièce d'oeuvre (37), de souder un autre élément de la pièce d'oeuvre (38) sur celui-ci, **caractérisé par** un support de soudage pour la pièce d'oeuvre (36) composée de deux corps de serrage (21, 47 ; 22, 48) présentant des surfaces de serrage (43, 44), entre lesquelles peuvent être serrés les éléments de la pièce d'oeuvre (37, 38) à souder, et lesquelles sont définies par des surfaces individuelles limitrophes, qui produisent simultanément une pression de serrage sur la pièce d'oeuvre (36), au moins deux surfaces individuelles étant movibles transversalement par rapport à la surface de serrage (43, 44) correspondante, en poussant avec une pression de serrage essentiellement identique contre la pièce d'oeuvre (36), au moins une surface de serrage (44) étant transversalement ajustable par rapport à une autre surface de serrage (43) au moyen d'un dispositif de commande (20), et une des surfaces de serrage (43) délimitant un passage (50) pour le rayon laser (10).

2. Dispositif de soudage au laser par transmission d'après la revendication 1, **caractérisé en ce qu'**au moins deux jusqu'à toutes les surfaces individuelles d'au moins une surface de serrage (43, 44) sont réalisées d'une seule pièce entre elles, **en ce que** notamment des surfaces individuelles limitrophes s'aboutent à peu près sans vides, et **en ce que** de préférence des surfaces individuelles limitrophes sont raccordées entre elles de manière élastique sous flexion.

3. Dispositif de soudage au laser par transmission d'après la revendication 1 ou 2, **caractérisé en ce qu'**au moins deux jusqu'à toutes les surfaces individuelles se trouvent l'une à côté de l'autre avec un écart inférieur à l'ampleur maximale ou minimale d'une surface individuelle, **en ce que** notamment plus que deux surfaces individuelles sont disposées l'une à côté de l'autre dans au moins une rangée et **en ce que** de préférence des surfaces individuelles limitrophes peuvent être ajustées transversalement indépendamment l'une de l'autre.

4. Dispositif de soudage au laser par transmission d'après une des revendications précédentes, **caractérisé en ce qu'**au moins une surface individuelle est prévue sur un insert de serrage (47 ou encore 48) présentant une élasticité de compression, **en ce que** notamment l'insert de serrage (47, 48) comprend un élastomère, et **en ce que** de préférence la face de l'insert de serrage (47, 48) à l'opposé de la surface individuelle est soutenue par une contre-surface indéformable.

5. Dispositif de soudage au laser par transmission d'après une des revendications précédentes, **caractérisé en ce qu'**au moins une surface individuelle est inflexible sous compression, **en ce que** notamment l'insert de serrage (47) est déplaçable, indépendamment des inserts de serrage limitrophes, en direction transversale par rapport au plan d'aboutement des éléments de pièce d'oeuvre (37, 38) à souder, et **en ce que** de préférence le corps de serrage (21, 47) forme un peigne avec des dents situées l'une à côté de l'autre à peu près parallèlement au plan d'aboutement, dont les extrémités formant les surfaces individuelles sont pivotables de manière élastique sous flexion transversalement par rapport au plan d'aboutement.

6. Dispositif de soudage au laser par transmission d'après une des revendications précédentes, **caractérisé en ce que** l'axe du rayon laser croise la surface de serrage (44) qui n'est pas pourvue de passage, et **en ce que** de préférence l'autre surface de serrage (43) est décalée en arrière par rapport à la surface de serrage (44) qui n'est pas pourvue de passage, transversalement par rapport à la direction d'avance de soudage et parallèlement au plan d'aboutement.

7. Dispositif de soudage au laser par transmission d'après une des revendications précédentes, **caractérisé en ce que** les surfaces individuelles d'une surface de serrage (43) sont raccordées de manière essentiellement rigide entre elles, **en ce que** notamment sur un corps de serrage (21) on prévoit un arrêt de pièce d'oeuvre (51) pour aligner la pièce d'oeuvre (36) par rapport à la surface de serrage (44) située à l'opposée, et **en ce que** de préférence l'arrêt (51) est prévu sur le corps de serrage (21) délimitant le passage (50).

8. Dispositif de soudage au laser par transmission d'après une des revendications précédentes, **caractérisé en ce que** le corps de serrage présente une mâchoire de serrage (21 ou encore 22) avec essentiellement toutes les surfaces individuelles correspondantes, la mâchoire étant disposée de manière fixe sur une jumelle de serrage (18 ou encore 19) indéformable, **en ce que** notamment la mâchoire de serrage (21, 22) est fixée de manière remplaçable sur la jumelle de serrage (18, 19), et **en ce que** de préférence les mâchoires de serrage (21, 22) opposées présentent des dimensions différentes.

9. Dispositif de soudage au laser par transmission d'après une des revendications précédentes, **caractérisé en ce que** les surfaces de serrage (43, 44) présentent en projection une forme d'anneau partiel jusqu'à entier, **en ce que** notamment les surfaces individuelles se trouvent l'une à côté de l'autre en direction de circonférence et/ou en direction radiale des surfaces de serrage (43, 44), et **en ce que** de préférence le corps de serrage (21, 47 ou encore 22, 48) présente une forme annulaire.

10. Dispositif de soudage au laser par transmission d'après une des revendications précédentes, **caractérisé en ce qu'**avec une base de support (4) des corps de serrage est lié un guidage de faisceau pour le rayon laser (10) présentant une sortie de faisceau (12) orientée contre les surfaces d'aboutement (41, 42) soutenues entre les surfaces de serrage (43, 44), pour la projection d'un champ d'action de faisceau (35) du rayon laser (10) sur les surfaces d'aboutement (41, 42), et avec un dispositif d'avance (13, 14) pour le déplacement du champ d'action de faisceau (35) le long des surfaces d'aboutement (41, 42), **en ce que** notamment le guidage de faisceau comprend au moins un miroir (9, 9') situé dans le trajet du faisceau, qui est pivotable de manière réversible en étant actionné par moteur autour d'un axe de commande (15 ou encore 16), et **en ce que** de préférence on prévoit des moyens de commande (30) pour la commande du parcours de réglage ou encore de la force de réglage de la surface de serrage (44), où au moins un capteur (24, 25) pour la mesure du parcours de serrage ou encore de la force de réglage est relié par un circuit d'acheminement des signaux (29) aux moyens de commande (30) et les moyens de commande (30) sont reliés par un circuit d'acheminement des signaux avec un dispositif moteur (20), tel qu'un vérin pneumatique, du corps de serrage (22, 48) ajustable.
